# EUROPEAN PATENT APPLICATION

(11) **EP 4 659 833 A1**
(43) Date of publication of application: **10.12.2025**
(21) Application number: 24195980.8
(22) Date of filing: 22.08.2024
(51) Int. Cl.: B01D 21/24, G05D 9/02

(54) **OVERFLOW OUTLET FOR EXCESS WATER IN WATER TREATMENT TANKS**

(30) Priority: 07.06.2024 PT 2024119519
(71) Applicant: Ark - Indústria, Lda, 4430-059 Vila Nova de Gaia (PT)
(72) Inventor: Aires Pereira Costa, Nelson, 4430-059 Vila Nova de Gaia (PT)
(74) Representative: do Nascimento Gomes, Rui

(57) **Abstract**

The present invention falls within the technical field of water treatment systems, defining a water overflow element (10) suitable for water tanks (20) in water treatment plants, taking wastewater treatment as an example. The overflow element (10) for excess water, the tank (20) in which it can be included and the respective station can have a miniaturised format application - sizes suitable for laboratory, experimental or training applications - when compared to tanks (20) and large stations, such as wastewater treatment plants connected to the sewage network and forming part of an installed water treatment infrastructure. A tank (20) comprising the overflow element (10) of the present invention can be miniaturised, when compared to large-scale tanks (20) that are a part of wastewater treatment plants, and can have a capacity of between 4 and 50 L.

## Description

### FIELD OF THE INVENTION

The present invention falls within the technical field of water treatment systems, defining a water overflow element suitable for water tanks in water treatment plants, taking wastewater treatment as an example. The overflow element for excess water of the present invention, the tank in which it can be included and the station in which said tank can be included can have a miniaturised format application - sizes suitable for laboratory or experimental applications, or for training purposes - when compared to tanks and large stations, such as wastewater treatment plants connected to the sewage network and forming part of an installed water treatment infrastructure. A tank comprising the overflow element of the present invention can be miniaturised, when compared to large-scale tanks that are part of wastewater treatment plants, and can have a capacity of between 4 and 50 L.

### PRIOR ART

Solutions that attempt to simulate the operation of wastewater treatment plants are well known in the state of the art.

In the particular case of wastewater treatment plants for educational purposes, these solutions simulate the operation of plants, including elements which, for example, are intended to represent contaminants, but do not consist of contaminants, consisting of fictitious elements with which they only seek to show trainees who operate or follow the operation of said systems how a wastewater treatment plant could work.

These systems are not functional and do not make it possible for water to be effectively treated, at least no more than removing said fictitious elements from water or showing by other means how a wastewater treatment plant could work in reality.

Therefore, it is not required that their components actually work to treat wastewater.

Additionally, even existing miniaturised systems involving miniaturised tanks do not present overflow solutions appropriate to their size, failing to take advantage of miniaturisation to include functionalities practicable by a human user.

The overflow element of the present solution makes it possible to overcome these limitations in an innovative manner, particularly in respect of a miniaturised structure.

### SUMMARY OF THE INVENTION

The present invention includes an element for the overflow of excess water for a water tank, the water tank being, in turn, for a water treatment plant, said overflow element comprising a first tube and a second tube, wherein
the first tube is formed above the second tube,
the first tube has an upper part for the entry of excess water
the second tube has a lower part for the exit of water coming from the first tube,
the first tube being telescopically and hermetically movable inside or outside the second tube, thus adjusting a height of the upper part of the first tube for the entry of excess water, the height being defined by the length of the two tubes deduced by the length of the part of a tube that is inside the other tube, said telescopic movement being adjustable.

The overflow element may be intended for a miniaturised water tank intended, in turn, for a miniaturised water treatment plant.

The first tube can be telescopically movable inside the second tube.

The first tube can be telescopically movable on the outside of the second tube.

The overflow element can additionally comprise a cup, said cup i) having an open upper surface, ii) a projection formed inside it with at least one opening and iii) being coupled solidly and hermetically to the upper part of the first tube for the entry of excess water, in such a way that water flowing over a side wall of the cup and entering it through the open upper surface reaches the inside of the cup and the opening of the projection of the cup in connection with the upper part of the first tube, in such a way that water flowing over the side wall of the cup runs into the first tube through the at least one opening of the cup.

The side wall of the cup forming part of the open top surface can be indented, each indentation having a preestablished width between tops, in such a way that any particles present in excess water and therefore overflowing, with a size greater than the preestablished width, are filtered by said indentation. Each opening of the cup projection may have a circular shape. The side wall of the cup that forms part of the open top surface may be indented as a crown.

The overflow element can additionally comprise a handle, which is solidly coupled to the upper part of the first tube, whereby a longitudinal moving action of the handle consequently causes the first tube to move in relation to the second tube.

The overflow element can comprise a first circular seal associated with a lower part of the first tube and a second circular seal associated with an upper part of the second tube, the first and second seals ensuring the tightness of the telescopic and movable connection of the first and second tubes.

The overflow element can additionally comprise a curved third tube with an upper part hermetically connected to a lower part of the second tube, so that the overflow can be vertically aligned with a tank and an outlet of the third tube can be connected to a side outlet of said tank.

The present invention also includes a system comprising a wastewater tank and an overflow element in accordance with the present invention, the tank having an upper opening and a lower opening, and an additional opening for excess water to overflow out, the overflow element being arranged inside the tank and vertically aligned with a central axis of the tank, a water outlet of the overflow element being connected to the additional opening of the tank, the tank having a capacity between 4 and 50 L.

The overflow element can additionally comprise a curved third tube with an upper part hermetically connected to a lower part of the second tube, so that the overflow can be vertically aligned with a tank and an outlet of the third tube can be connected to a side outlet of said tank, and the additional opening can be formed laterally.

The present invention further includes the use of the overflow element in accordance with the present invention as an overflow element for excess water in a miniaturised water tank, the tank having a capacity of between 4 and 50 L.

### DESCRIPTION OF FIGURES

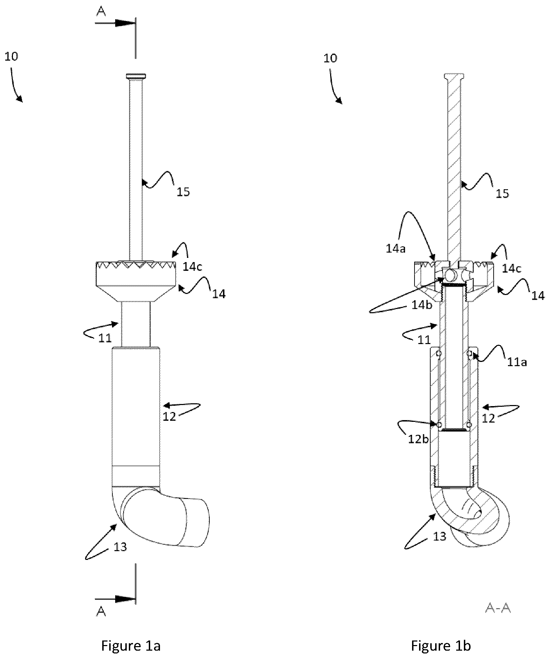

Figure 1a - representation of a side view of an overflow element (10) in accordance with the present invention. The overflow element (10) comprises a first tube (11) telescopically coupled to a second tube (12). The first tube (11) moves inside the second tube (12) and is partially arranged inside it. The first tube (11) is coupled to a puller (15) in the form of a rod, and they move jointly. Therefore, the movement of the rod causes the first tube (11) to move telescopically in relation to the second tube (12), consequently adjusting the overflow level inside a tank (20) in which the overflow element (10) is arranged. Between the first tube (11) and the puller (15) there is a cup (14), where overflowing water or liquid runs into the cup (14) and from there into the first tube (11). The cup (14) has an open top surface, whereby any liquid that reaches the inside of the cup (14) flowing over its side wall enters the inside of the cup (14) and from there runs into the first tube (11).
Figure 1b - representation of a sectional view along section A-A of the overflow element (10) in figure 1a. This sectional view makes it possible to identify the elements arranged inside the cup (14). Any liquid that reaches the inside of the cup (14) flowing over its lateral surface reaches the inside of the first tube (11) by entering openings (14b) formed in a centrally arranged projection (14a) of the cup (14). This projection (14a) and in particular the openings (14b) are arranged correspondingly in connection with the first tube (11).

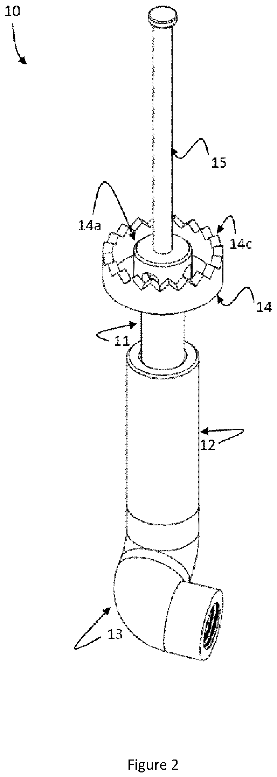

Figure 2 - representation of a perspective view of the overflow element in figure 1. This perspective view shows the third tube (13), which has two deflections. Therefore, the first and second tubes are aligned, with the third tube (13) showing two deflections at substantially 90°, which enable the overflow element to be coupled to a side wall of a tank (20).

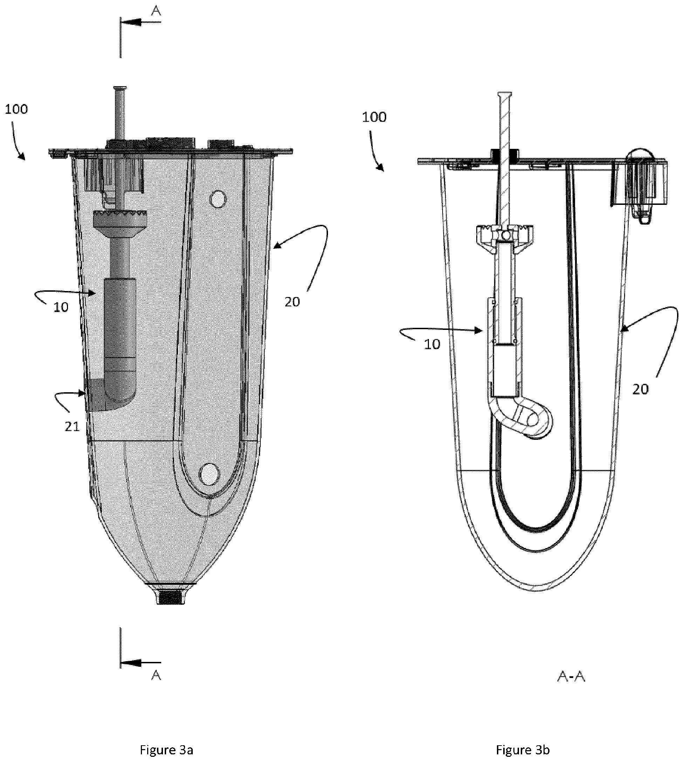

Figure 3a - representation of a system (100) in accordance with the present invention, wherein an overflow element (10) in accordance with figures 1a, 1b and 2 is arranged inside a tank (20), the puller (15) in the form of a rod being movable and projecting through a lid of the tank (20) and a lower part of the third tube (13) being coupled to a side wall of the tank (20) in which a side opening (21) is formed. If an increase in liquid inside the tank (20) is such that it exceeds a level above the side wall of the cup (14) of the overflow element (10), starting from the indented parts of the crown (14c), this liquid above said level will run into the cup (14) and from there it will be conveyed to the outside of the tank (20) in a controlled manner. Telescopic adjustment of the height of the cup (14) by adjusting the relative position between the first and second tubes makes it possible to adjust this level of overflow.
Figure 3b - representation of a sectional view along section A-A of the overflow element (10) in figure 3a.

### DETAILED DESCRIPTION

The overflow element (10) of the present invention is described below using non-limiting embodiments.

The overflow element (10) defines a telescopic system that provides a fine adjustment for the collection of sludge and suspended matter in view of the results of experiments and research carried out on processes such as oxidation, chemical precipitation and coagulation-flocculation in water treatment plants, such as miniaturised water treatment plants, comprising water tanks (20) where the aim is to prevent uncontrolled overflow that might cause undesirable contamination.

The overflow element (10) can be placed inside a tank (20). A lower part thereof, for example a lower part of the second or third tube (13), is connected to a wall of the tank (20) for the exit of overflowing liquid. As the tank (20) fills with water or another liquid, the liquid/water level rises until it reaches an upper part of the overflow element, for example the side wall of the cup (14). From there it will be conveyed, running into the first tube (11), then into the second tube (12) and/or to the third tube (13). From there, it runs into the tank outlet (20) to which the overflow element (10) is coupled, causing overflowing water/liquid to leave the tank (20) in a controlled manner.

Therefore, the overflow element (10) is coupled below the tank (20), with a free upper section, so that the telescopic movement between the first tube (11) and the second tube (12) can be adjusted, as shown in the figures.

This equipment is intended for the abovementioned collections by inserting it into a tank (20).

At the top it can have a conical-shaped indented filter with an upper ring, designated as cup (14). The concavity of this filter enables particles suspended on the surface to be collected in order to analyse their behaviour and the reason for their existence, depending on the experience and research being carried out.

This linear movement is provided by a puller (15) which may comprise or consist of a mechanised - motorised or not - or manual rod, adjusting the height of the overflow level and/or for the abovementioned functions of collection of suspended particles.

The rod may have a length equal to or greater than the length of the second tube (12). The rod may have a length such that, when the first and/or second tube (12) is retracted into the other tube to a maximum extent and when the overflow element (10) is inside a tank (20), the rod is above an upper opening of the tank (20), to which a lid is attached. This lid can have an opening so that the rod can pass through it.

The overflow element (10) thus makes it possible to create intermediate levels of adjustable emergency drainage for the safety of users and equipment where it is inserted.

The overflow element (10) provides for:
- Selective removal of particles suspended on the liquid surface
- Adjustable maximum safety level
- Intermediate level adjustment

The overflow element (10) may include a third tube (13) with a curve. This third tube (13) thus makes it possible to realise a deflected connection by coupling two points forming part of lines that are perpendicular or substantially perpendicular to each other. Therefore, it is attached above to a lower part of the second tube (12) and below and laterally to a side opening (21) in the wall of the tank (20). Between the lower part of the second tube (12) and the side opening (21) of the wall, the third tube (13) makes at least one deflection, which may be of 90°. Therefore, the third tube (13) can comprise one or more deflections. In the example in the figures, the third tube (13) contains two deflections substantially at 90°.

The overflow element (10) can comprise a cup (14). Following the example of figures 1a and 2, the cup (14) has an open top surface. The base of the cup (14) contains a projection (14a) formed inside it. This projection (14a), in accordance with the figures, is cylindrical and centrally formed. The projection (14a) contains at least one opening (14b) and this opening (14b) is connected to the first tube (11) via the upper part of the first tube (11). In accordance with the figures, the projection (14a) has several openings (14b) formed laterally in its cylinder wall. Additionally, the base of the cup (14) where the projection (14a) is formed can be tapered. The projection (14a) forms a single piece with the cup (14) or it may consist of a separate piece, attachable to a central part of the cup (14), which contains a centrally formed opening.

The projection (14a) formed in the cup (14) is also such that its longitudinal extension accommodates a section of the upper part of the first tube (11), to be coupled between the cup (14) and the first tube (11), maintaining the connection for the overflowing liquid to run down. This longitudinal extension may include a perforated sealing ring, in such a way that these perforations correspond to the openings of the projection (14a) of the cup (14) and to the upper part of the first tube (11), thus providing for the passage of overflowing liquid between the cup (14) and the first tube (11) and, simultaneously, an improved seal.

The overflow element (10) can be arranged inside a tank (20). A lower part thereof, for example a lower part of the third tube (13), is connected to a side wall of the tank (20) for the exit of overflowing liquid. As the tank (20) fills with water or another liquid, the water level rises until it reaches the side wall of the cup (14). Once it flows over the side wall, the water runs into the cup (14). It then reaches the projection (14a) of the cup (14) and, consequently, the openings (14b) formed therein. From there it runs into the first tube (11), then into the second tube (12) and finally into the third tube (13). It subsequently runs into the side outlet of the tank (20) to which the overflow element (10) is coupled, causing overflowing water/liquid to exit the tank (20) in a controlled manner.

The side wall of the cup (14) that forms part of the open top surface may be indented as a crown (14c). This crown indentation (14c) has a saw-like configuration, where triangular projections are formed accompanying the side wall, as shown in the figures. The crown-shaped arrangement (14c), with the configuration of a crown (14c), defines narrowings which allow the passage of water overflowing from a tank (20) and particles smaller than a given narrowing. However, particles larger than a given narrowing will be retained in the crown (14c). This enables the overflow element (10) not only to operate as a safeguard for situations where excess water overflows, but also to collect suspended particles smaller than a given narrowing.

As will be clear to one skilled in the art, the present invention should not be limited to the embodiments described herein, and a number of changes are possible which remain within the scope of the present invention.

Obviously, the preferred embodiments shown above are combinable, in the different possible forms, the repetition all such combinations being herein avoided.

## Claims

1. An element (10) for the overflow of excess water for a water tank (20), the water tank (20) being, in turn, for a water treatment plant, said overflow element (10) comprising a first tube (11) and a second tube (12), wherein
the first tube (11) is formed above the second tube (12),
the first tube (11) has an upper part for the entry of excess water
the second tube (12) has a lower part for the exit of water coming from the first tube (11),
the first tube (11) being telescopically and hermetically movable inside or outside the second tube (12), thus adjusting a height of the upper part of the first tube (11) for the entry of excess water, the height being defined by the length of the two tubes deduced by the length of the part of a tube that is inside the other tube, said telescopic movement being adjustable.

2. Overflow element (10) according to the previous claim, wherein the first tube (11) is telescopically movable inside the second tube (12).

3. Overflow element (10) according to claim 1, wherein the first tube (11) is telescopically movable on the outside of the second tube (12).

4. Overflow element (10) according to any of the preceding claims, wherein it additionally comprises a cup (14), said cup (14) i) having an open upper surface, ii) a projection (14a) formed inside it with at least one opening (14b) and iii) being coupled solidly and hermetically to the upper part of the first tube (11) for the entry of excess water, in such a way that water flowing over a side wall of the cup (14) and entering it through the open upper surface reaches the inside of the cup (14) and the opening (14b) of the projection (14a) of the cup (14) in connection with the upper part of the first tube (11), in such a way that water flowing over the side wall of the cup (14) runs into the first tube (11) through the at least one opening (14b) of the cup (14).

5. Overflow element (10) according to the previous claim, wherein the side wall of the cup (14) forming part of the open top surface is indented, each indentation having a preestablished width between tops, in such a way that any particles present in excess water and therefore overflowing, with a size greater than the preestablished width, are filtered by said indentation.

6. Overflow element (10) according to the previous claim, wherein the side wall of the cup (14) that forms part of the open top surface is indented as a crown (14c).

7. Overflow element (10) according to any of claims 4-6, wherein each opening (14b) of the projection (14a) of the cup (14) has a circular shape.

8. Overflow element (10) according to any of the preceding claims, wherein it further comprises a handle (15) which is solidly coupled to the upper part of the first tube (11), whereby a longitudinal moving action of the handle (15) consequently causes the first tube (11) to move in relation to the second tube (12).

9. Overflow element (10) according to any of the preceding claims, wherein it comprises a first circular seal (11a) associated with a lower part of the first tube (11) and a second circular seal (12a) associated with an upper part of the second tube (12), the first and second seals (11a, 12a) ensuring the tightness of the telescopic and movable connection of the first and second tubes.

10. Overflow element (10) according to any of the preceding claims, wherein it further comprises a curved third tube (13) with an upper part hermetically connected to a lower part of the second tube (12), so that the overflow can be vertically aligned with a tank (20) and an outlet of the third tube (13) can be connected to a side outlet of said tank (20).

11. System comprising a wastewater tank (20) and an overflow element (10) according to any of the preceding claims, the tank (20) having an upper opening and a lower opening, and an additional opening for excess water to overflow out, the overflow element (10) being arranged inside the tank (20) and vertically aligned with a central axis of the tank (20), a water outlet of the overflow element being connected to the additional opening of the tank (20), the tank (20) having a capacity between 4 and 50 L.

12. System according to the preceding claim, wherein the overflow element (10) is according to claim 9 and the additional opening is formed laterally.

13. Use of the overflow element (10) according to any of claims 1-10 as an overflow element (10) for excess water in a miniaturised water tank (20), the tank (20) having a capacity of between 4 and 50 L.
